# EUROPÄISCHE PATENTSCHRIFT

(11) **EP 2 057 877 B1**
(45) Veröffentlichungstag und Bekanntmachung des Hinweises auf die Patenterteilung: **03.10.2012**
(21) Anmeldenummer: 08019246.1
(22) Anmeldetag: 03.11.2008
(51) Int. Cl.: A01C 23/00, A01M 7/00

(54) **Landwirtschaftliche Feldspritze**
Agricultural field spraying device
Pulvérisateur agricole à cultures

(30) Priorität: 08.11.2007 DE 102007053114
(43) Veröffentlichungstag der Anmeldung: 13.05.2009
(73) Patentinhaber: Amazonen-Werke H. Dreyer GmbH & Co. KG, 49205 Hasbergen (DE)
(72) Erfinder: Ehlen, Volker, 49205 Hasbergen (DE)

(56) Entgegenhaltungen:
- EP-A- 0 726 024
- DE-A1- 10 247 490
- DE-U1- 9 404 071
- FR-A- 2 703 267

## Beschreibung

Die Erfindung betrifft eine landwirtschaftliche Feldspritze gemäß des Oberbegriffes des Patentanspruches 1.

Eine derartige landwirtschaftliche Feldspritze ist beispielsweise in der EP 0 623 280 B1 beschrieben. Diese landwirtschaftliche Feldspritze weist ein elektronisches Kontrollgerät auf, mittels welchem verschiedene Arbeitsgänge vor oder nach dem Spritzvorgang angewählt werden können. So kann die Feldspritze beispielsweise automatisch auf folgende Arbeitsvorgänge eingestellt werden: Füllen des Spritzbehälters, Einbringen eines Behandlungsmittels in den Spritzbehälter, Umrühren des Inhalts des Spritzbehälters, füllen eines Spülbehälters, Spülen des Spritzbehälters, Spülen der Spritzdüsenarmes, Spülen des Flüssigkeitskreises.

Weiterhin weist dieses elektronische Kontrollgerät eine programmierbare Zeitsteuerung auf, die in der Lage ist, die selbstständige Abfolge bestimmter Arbeitsvorgänge zu steuern. Hierbei können dann Funktionen, wie Arbeitsbeginn und Turbofüllen oder das Spülen des Auslegers, des Zubehörs und des Spritzbehälters dank einer programmierten Zeitsteuerung selbstständig aufeinander folgen.

Das Problem besteht jedoch nun darin, dass bei Beendigung der Behandlung einer Fläche sich noch Spritzmittel im Tank befindet oder jedoch zuwenig Spritzmittel bei der letzten Behälterfüllung vorbereitet worden ist, so dass die Fläche nicht komplett bearbeitet werden kann.

Entsprechend der Lehre der DE 102 47 490 A1 hat man versucht, hier Abhilfe zu schaffen. Hier wird durch eine elektronische Rechnervorrichtung für die Restfläche die Restmenge auszubringenden Materials berechnet. Jedoch wenn die Restfläche ungenau ermittelt worden ist, so kann es hier dazu kommen, dass sich noch zuviel Material im Vorratsbehälter bei dem Fertigstellen der zu behandelnden Fläche befindet oder das vor Beendigung der Behandlung der gesamten Fläche zu wenig Material für die Restfläche angemischt worden ist.

Der Erfindung liegt die Aufgabe zugrunde, hier auf einfache Weise Abhilfe zu schaffen.

Ausgehend vom eingangs genannten Stand der Technik wird diese Aufgabe dadurch gelöst, dass in dem Speicher zumindest ein Programm abgespeichert ist, so dass die Steuer- und/oder Regeleinheit in der Lage ist, bei der Ausbringung der letzten Füllung des Spritzmittelbehälters für die zu behandelnde landwirtschaftliche Fläche, das Spritzmittel in möglichst gleichmäßiger Weise unter Berücksichtigung, dass bei Beendigung der Behandlung der gesamten Fläche zumindest annähernd das gesamte angemischte Spritzmittel, insbesondere aus dem Spritzmitteltank ausgebracht ist.

Infolge dieser Maßnahmen wird aufgrund des hinterlegten Programms in Verbindung mit einer in dem Speicher hinterlegten Applikationskarte für die zu behandelnden Fläche und einem Ortungssystem sowie der Feldspritze zugeordneten Sensoren zur Ermittlung der ausgebrachten Flüssigkeitsmittel die tatsächlich ausgebrachte Menge ständig ermittelt, mit der Sollmenge und der noch zu behandelnden Restfläche verglichen. Aus diesen Daten berechnet der Bordcomputer die jeweils tatsächlich auszubringende Menge und passt sie ständig der Restfläche an, so dass bei Beendigung und Fertigstellung der zu behandelnden Fläche quasi punkt- bzw. zielgenau sämtliche angemischte Spritzmittelbrühe auf der zu behandelnden Fläche ausgebracht ist.

Hierbei kann in einer Erweiterung und Fortbildung der Erfindung vorgesehen sein, dass in dem Speicher zumindest ein Programm abgespeichert ist, welches zusätzlich automatisch den Reinigungsvorgang des Spritzmittelkreises und/oder zumindest eines Spritzmittelbehälters bei Beendigung der Ausbringung der letzten Füllung des Spritzmittelbehälters vor Beendigung der Behandlung der gesamten Fläche einleitet und vor Beendigung der behandelnden Fläche abschließt.

Infolge dieser Maßnahmen wird dann rechtzeitig vor Fertigstellung der zu behandelnden Fläche der Reinigungsvorgang eingeleitet, so dass je nach Vorgabe entweder nur das Gestänge oder die gesamte Maschine gereinigt ist. Hierzu wird dann der Reinigungsvorgang entsprechend rechtzeitig eingeleitet.

Die Arbeitsweise und Funktionsweise der Feldspritze ist folgende:

Im Laufe des Ausbringens der letzten Füllmenge, die sich in dem Behälter der Pflanzenschutzspritze befindet, um die behandelnde Fläche vollständig zu behandeln wird in dem als Bordcomputer ausgebildeten Steuer- und Regeleinrichtung das in dem Speicherprogramm hinterlegte Programm aufgerufen, in dem hinterlegt ist, dass bei vollständiger Behandlung der zu behandelnden Fläche auch die letzte Füllung des Spritzmittelbehälters verbraucht ist. Hierbei wird die Flüssigkeitsmenge im Spritzbehälter ständig gemessen und die verbrauchte Menge mit der zu behandelnden Fläche verglichen. Die Durchflussmesser und sonstigen Messgeber werden dann automatisch nachgeeicht und die Ausbringmenge entsprechend korrigiert, so dass am Ende der zu behandelnden Fläche die sich im Spritzmittelbehälter noch befindliche Menge zumindest annähernd vollständig verbraucht ist.

Dies geschieht nach folgender Vorgehensweise, dass aufgrund des in dem Speicher hinterlegten Programms die Steuer- und Regeleinrichtung, die als Bordcomputer ausgebildet ist, in der Lage ist, bei der Ausbringung der letzten Füllung des Spritzmittelbehälters für die zu behandelnde landwirtschaftliche Fläche, das Spritzmittel in möglichst gleichmäßiger Weise unter Berücksichtigung, dass bei Beendigung der Behandlung der gesamten Fläche zumindest annähernd das gesamte angemischte Spritzmittel, insbesondere das aus dem Spritzmitteltank ausgebracht ist.

In einer anderen Verfahrensweise, wenn der Anwender wünscht, dass bei Beendigung der Ausbringarbeit bzw. bei Beendigung der Behandlung der gesamten Fläche auch das Gestänge bzw. die gesamte Maschine gereinigt ist, können entsprechende in dem Speicher des Bordcomputers hinterlegte Programme aufgerufen werden. Hierbei kann beispielsweise im Bordcomputer ein Programm "Gestänge reinigen" hinterlegt sein. In diesem Falle wird der Anwender aufgefordert, zunächst langsam weiterzufahren. Gleichzeitig wird das Gestängereinigungsprogramm eingeleitet und die entsprechenden Vorrichtungen und Ventile an der Maschine in entsprechende Positionen gebracht. Es wird das Gestängereinigungsprogramm durchgeführt und die Leitungen der Maschine werden entsprechend gereinigt und mit neutralem Wasser durchgespült und gefüllt.

In anderer Weise kann auch das in dem Speicher hinterlegte Programm "Gesamte Maschine reinigen" aufgerufen werden. In diesem Falle wird das Pflanzenschutzmittel, Spritzmittel etc. in verdünnter Konzentration in absätziger Weise ausgebracht. Nach einer Fahrstrecke beispielsweise von 250 m ist dann die gesamte Feldspritze incl. Gestänge komplett gereinigt.

Hierbei kann vorgesehen sein, dass sich die Teilbreiten nacheinander von innen nach außen abschalten und dass nach dem Abschalten der äußeren Teilbreiten der Reinigungsvorgang dann beendet ist.

Dies geschieht durch das in dem Speicher hinterlegte Programm. Dieses Programm stellt sicher, dass automatisch zusätzlich der Reinigungsvorgang des Spritzmittelkreises und/oder zumindest eines Spritzmittelbehälters bei Beendigung der Ausbringung der letzten Füllung des Spritzmittelbehälters vor Beendigung der Behandlung der gesamten Fläche eingeleitet wird und vor Beendigung der behandelnden Flächen abgeschlossen ist.

## Patentansprüche

1. Landwirtschaftliche Feldspritze mit einer Spritzeinheit, die mindestens einen Spritz- und/oder Flüssigkeitsbehälter, zumindest eine mit dem Behälter verbundene Pumpe und zumindest einen Strömungsmittelkreis besitzt, welcher Spritzdüsen und diese mit der Pumpe verbindende Leitungen aufweist, einer vorzugsweise als Bordcomputer ausgebildeten elektronischen Steuer- und/oder Regeleinrichtung zum Steuern und/oder Regeln der Betriebsweise der Feldspritze während des Spritzvorganges, sowie Mitteln zum Steuern und/oder Regeln des Spritzvorganges, wobei diese Mittel von der Steuer- und/oder Regeleinheit ansteuerbare, motorisch betätigbare Ventile aufweist, wobei die Steuer- und/oder Regeleinheit zumindest einen Speicher, in dem zumindest ein Programm mit verschiedenen Betriebsweisen der Feldspritze hinterlegt ist, aufweist, **dadurch gekennzeichnet, dass** in dem Speicher zumindest ein Programm abgespeichert ist, durch das die Steuer- und/oder Regeleinheit in der Lage ist, bei der Ausbringung der letzten Füllung des Spritzmittelbehälters für die zu behandelnde landwirtschaftliche Fläche das Spritzmittel in möglichst gleichmäßiger Weise auszubringen, unter Berücksichtigung, dass bei Beendigung der Behandlung der gesamten Fläche zumindest annähernd das gesamte angemischte Spritzmittel, insbesondere aus dem Spritzmitteltank ausgebracht ist.

2. Feldspritze nach Anspruch 1, **dadurch gekennzeichnet, dass** in dem Speicher zumindest ein Programm abgespeichert ist, welches zusätzlich automatisch den Reinigungsvorgang des Spritzmittelkreises und/oder zumindest eines Spritzmittelbehälters bei Beendigung der Ausbringung der letzten Füllung des Spritzmittelbehälters vor Beendigung der Behandlung der gesamten Fläche einleitet und vor Beendigung der behandelnden Fläche abschließt.

## Claims

1. Agricultural field spraying device having a spraying unit, which has at least one spraying and/or liquid tank, at least one pump connected to the tank and at least one fluid circuit, said fluid circuit exhibiting spray nozzles and lines connecting said nozzles to the pump, an electronic control and/or regulator unit preferably in the form of an on-board computer for controlling and/or regulating the operating mode of the field spraying device during the spraying process, as well as means of controlling and/or regulating the spraying process, wherein said means exhibit motor-operated valves, wherein the control and/or regulator unit has at least one memory, in which at least one program with different operating modes of the field spraying device is stored, **characterized in that** at least one program is stored in the memory, through which the control and/or regulator unit is capable of applying the spraying agent as uniformly as possible when applying the last fill of the spraying agent tank for the agricultural land to be treated, bearing in mind that when the whole area has been treated, at least roughly the entire mixed-in spraying agent is applied, particularly from the spraying agent tank.

2. Field spraying device according to Claim 1, **characterised in that** at least one program is stored in the memory, which in addition automatically initiates the cleaning process of the spraying agent circuit and/or at least one spraying agent tank upon completion of the application of the last fill of the spraying agent tank before treatment of the entire area is completed and finishes it before completing the area being treated.

## Revendications

1. Pulvérisateur agricole comportant :
une unité de pulvérisation ayant au moins un réservoir de pulvérisation et/ou de liquide, au moins une pompe reliée au réservoir et au moins un circuit de liquide comprenant des buses de pulvérisation et des conduites reliant celles-ci à la pompe,
- une installation de commande et/ou de régulation électronique en forme d'ordinateur de bord pour commander et/ou réguler le fonctionnement du pulvérisateur pendant une opération de pulvérisation ainsi que des moyens pour commander et/ou réguler l'opération de pulvérisation,
- ces moyens comportant des soupapes motorisées commandées par l'unité de commande et/ou de régulation,
- l'unité de commande et/ou de régulation comportant au moins une mémoire contenant un programme avec différents modes de fonctionnement du pulvérisateur,
pulvérisateur agricole **caractérisé en ce que**
la mémoire contient au moins un programme qui permet à l'unité de commande et/ou de régulation lors de la distribution de la dernière charge du réservoir d'agent de pulvérisation, pour la surface agricole à traiter, de distribuer l'agent de pulvérisation d'une manière aussi régulière que possible en tenant compte de ce qu'à la fin du traitement de l'ensemble de la surface, au moins pratiquement tout l'agent de pulvérisation, préparé, est vidé du réservoir d'agent de pulvérisation.

2. Pulvérisateur agricole selon la revendication 1
**caractérisé en ce que**
la mémoire contient au moins un programme qui commande au moins automatiquement en plus la phase de nettoyage du circuit d'agent de pulvérisation et/ou au moins du réservoir d'agent de pulvérisation à la fin de la distribution de la dernière charge extraite du réservoir d'agent de pulvérisation avant de terminer le traitement de toute la surface et ce programme termine l'opération avant de terminer le traitement de la surface.
